# EUROPÄISCHE PATENTANMELDUNG

(11) **EP 1 160 523 A2**
(43) Veröffentlichungstag der Anmeldung: **05.12.2001**
(21) Anmeldenummer: 01112321.3
(22) Anmeldetag: 19.05.2001
(51) Int. Cl.: F25B 49/02, B60H 1/32

(54) **Einrichtung zum Antrieb eines Klimakompressors**

(30) Priorität: 02.06.2000 DE 10027617
(71) Anmelder: Mannesmann VDO AG, 60388 Frankfurt am Main (DE)
(72) Erfinder: Bay, Wolfgang, 65936 Frankfurt/Main (DE); Henninger, Michael, 65779 Kelkheim (DE)
(74) Vertreter: Rassler, Andrea, Dipl.-Phys.

(57) **Zusammenfassung**

Bei einer Einrichtung zum Antrieb eines Klimakompressors (6) mit einem Elektromotor (5) insbesondere für Kraftfahrzeuge ist eine Anordnung zur Verringerung der Druckdifferenz zwischen Saug- und Druckseite des Klimakompressors (6) während einer Anlaufphase des Elektromotors (5) vorgesehen.

## Beschreibung

Die Erfindung betrifft eine Einrichtung zum Antrieb eines Klimakompressors mit einem Elektromotor insbesondere für Kraftfahrzeuge.

Beim Antrieb von Klimakompressoren mit Elektromotoren sind verschiedene Forderungen zu erfüllen, insbesondere Zuverlässigkeit, geringe Kosten, geringer Wartungsbedarf und möglichst geringes Gewicht. Im Sinne einer Energieersparnis soll ferner der Klimakompressor nur dann eingeschaltet werden, wenn er gebraucht wird. Beim wiederholten Anlaufen arbeitet jedoch der Klimakompressor gegen den Druck des Kältemittels, so daß der Anlauf des Elektromotors erschwert wird, insbesondere ein hoher Anlaufstrom auftritt.

Der erschwerte Anlauf liegt insbesondere bei sensorlosen Ansteuerungsverfahren vor, bei denen die Rotorlage aus der EMK gewonnen wird, welche wegen mangelnder Drehzahl praktisch nicht zu messen ist.

Aufgabe der vorliegenden Erfindung ist es, unter Vermeidung der obengenannten Nachteile einen Antrieb für Klimakompressoren anzugeben. Diese Aufgabe wird erfindungsgemäß dadurch gelöst, daß eine Anordnung zur Verringerung der Druckdifferenz zwischen Saug- und Druckseite des Klimakompressors während einer Anlaufphase des Elektromotors vorgesehen ist.

Die Erfindung hat den Vorteil, daß der Anlaufstrom wesentlich verringert wird und damit der Elektromotor nicht auf die entsprechend hohe Belastung ausgelegt sein muß. Bei der Verwendung von Spiral-Kompressoren steht die Kühlleistung durch den schnelleren Anlauf dann schneller zur Verfügung, da diese bei höheren Drehzahlen besser dichten. Außerdem fällt die Verlustleistung in einer elektronischen Steuereinrichtung durch den geringeren Anlaufstrom geringer aus.

Insbesondere wenn das Kältemittel auch zur Kühlung der Steuereinrichtung genutzt wird, steht die Kühlung der Steuereinrichtung schneller zur Verfügung, was ebenfalls eine Anwendung kostengünstigerer Transistoren ermöglicht. Schließlich erfolgt eine geringere Belastung des Bordnetzes während des Anlaufs.

Eine Entmagnetisierung kann beispielsweise bei einem bürstenbehafteten Gleichstrommotor auch ohne elektronische Steuereinrichtung verhindert werden.

Bei einer ersten vorteilhaften Ausgestaltung der Erfindung ist vorgesehen, daß die Anordnung zur Verringerung der Druckdifferenz dadurch gebildet ist, daß ein im Kältemittelkreislauf angeordnetes Expansionsventil steuerbar ist.

Eine zweite vorteilhafte Ausführungsform besteht darin, daß die Anordnung zur Verringerung der Druckdifferenz von einem steuerbaren Bypass zwischen Saug- und Druckseite des Klimakompressors gebildet ist. Dabei kann der Bypass innerhalb oder außerhalb des Gehäuses des Klimakompressors angeordnet sein und sowohl elektrisch als auch mechanisch gesteuert werden.

Eine dritte vorteilhafte Ausführungsform sieht vor, daß die Anordnung zur Verringerung der Druckdifferenz von einem steuerbaren zusätzlichen Expansionsventil gebildet ist, das zwischen der Hochdruckseite des Expansionsventils und der Saugseite des Klimakompressors im Kältemittelkreislauf angeordnet ist.

Eine vierte vorteilhafte Ausführungsform besteht darin, daß die Anordnung zur Verringerung der Druckdifferenz von einem im Klimakompressor angeordneten drehzahlgesteuerten Ventil gebildet ist. Dabei kann vorzugsweise vorgesehen sein, daß das drehzahlgesteuerte Ventil eine Fliehkraft-Dichtung ist.

Durch die geringere Last während des Anlaufens wird eine Weiterbildung ermöglicht, die darin besteht, daß der Elektromotor ein sensorloser Motor mit elektronischer Kommutierung ist. Damit verringert sich einerseits der technische Aufwand, während sich andererseits die Zuverlässigkeit erhöht.

Eine weitere vorteilhafte Ausgestaltung der Erfindung besteht darin, daß ein Steuergerät innerhalb einer vorgegebenen Zeitspanne nach dem Einschalten des Elektromotors die Anordnung zur Verringerung der Druckdifferenz ansteuert und danach wieder abschaltet.

Bei einer anderen vorteilhaften Ausgestaltung ist vorgesehen, daß die Steuerung der Anordnung zur Verminderung der Druckdifferenz in Abhängigkeit von der Drehzahl des Kompressors steuerbar ist.

Da die Verringerung der Druckdifferenz zu einer Abkühlung der Saugseite führt, ist es zusätzlich vorteilhaft, wenn das Steuergerät und der Elektromotor in wärmeleitender Verbindung mit dem Kältemittel an der Saugseite stehen.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein erstes Ausführungsbeispiel,
- Fig. 2: ein zweites Ausführungsbeispiel und
- Fig. 3: ein drittes Ausführungsbeispiel.

Gleiche Teile sind in den Figuren mit gleichen Bezugszeichen versehen.

Beide Figuren zeigen jeweils schematisch ein Kompressionskältesystem. Es weist einen von einem Elektromotor 5 angetriebenen Kompressor 6 auf, bei dem es sich insbesondere um einen an sich bekannten Spiral-Kompressor handeln kann. Dieser hat den Vorteil einer kontinuierlichen pulsarmen Förderung des in der Figur nicht dargestellten Kältemittels. Das Kältesystem weist ferner einen Verflüssiger 7, ein Expansionsventil 8 und einen Verdampfer 9 auf. Der Kompressor 6, der Verflüssiger 7, das Expansionsventil 8 und der Verdampfer 9 sind in der dargestellten Weise mittels Kältemittelleitungen 10 verbunden, so daß ein kontinuierlicher Kreislauf eines Kältemittels vom Kompressor 6 über den Verflüssiger 7, das Expansionsventil 8 und den Verdampfer 9 zurück zum Kompressor 6 erzielt wird. Die gestrichelte Linie 15 deutet die Grenze zwischen der Hochdruckseite (oben) und der Niederdruckseite (unten) an.

Die Funktion derartiger Kältesysteme ist an sich bekannt und braucht zum Verständnis der Erfindung nicht weiter erläutert zu werden. Es wird lediglich darauf hingewiesen, daß nach dem Abschalten des Elektromotors 5, beispielsweise weil der Innenraum des Kraftfahrzeugs eine gewünschte Temperatur erreicht hat, der Druck auf der Hochdruckseite des Kältesystems längere Zeit bestehenbleibt.

Bei beiden Ausführungsbeispielen befindet sich der Elektromotor 5 und der Kompressor 6 in einem gemeinsamen Gehäuse 11, wobei der Elektromotor 5 von dem Kältemittel umflossen und somit gut gekühlt wird. Zusätzlich kann die Steuerelektronik durch das Kältemittel gekühlt werden.

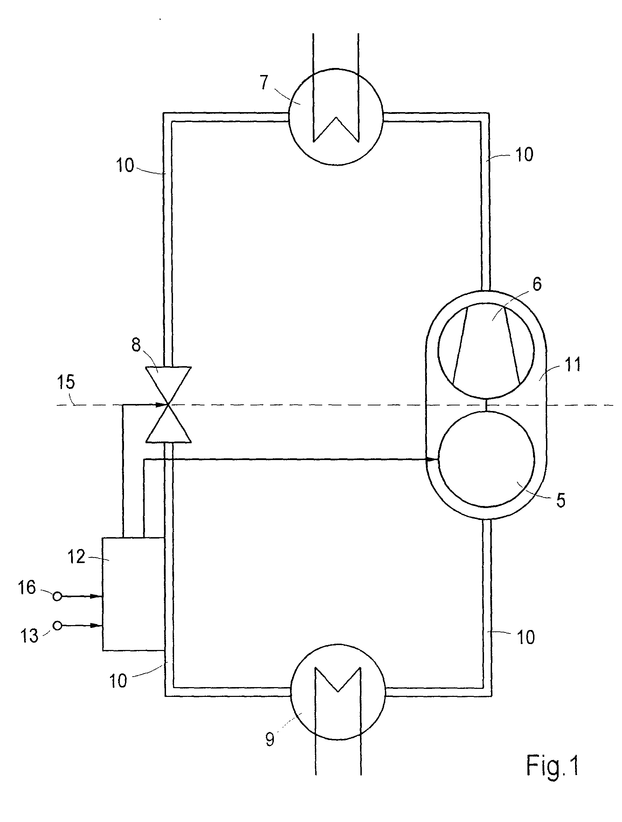

Bei dem Ausführungsbeispiel nach Fig. 1 ist in wärmeleitender Verbindung mit der Kältemittelleitung 10 im Niederdruckbereich ein Steuergerät 12 verbunden, dem bei 13 Betriebsspannung und bei 16 eine Drehzahl- oder Leistungsvorgabe zugeführt werden. Sobald die Betriebsspannung eingeschaltet wird, wird das steuerbare Expansionsventil 8 geöffnet, so daß sich die Druckdifferenz vom Kompressor 6 verringert. Unmittelbar danach wird der Elektromotor 5 eingeschaltet. Nach einer Anlaufzeit des Elektromotors 5 wird dann das Expansionsventil 8 wieder für den Kühlbetrieb eingestellt.

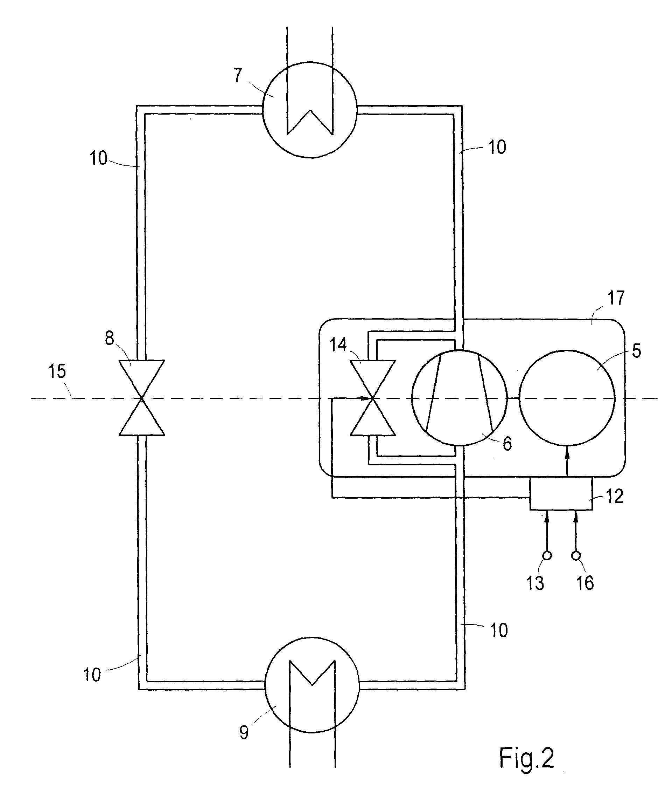

Bei dem Ausführungsbeispiel nach Fig. 2 ist ein Steuergerät 12 an dem Gehäuse 17 angeschlossen und steuert ein im Gehäuse 17 zusätzliches Ventil 14 während der Anlaufphase in den geöffneten Zustand. Nach der Anlaufphase wird das Ventil 14 geschlossen, so daß das Kältesystem wie gewohnt arbeitet.

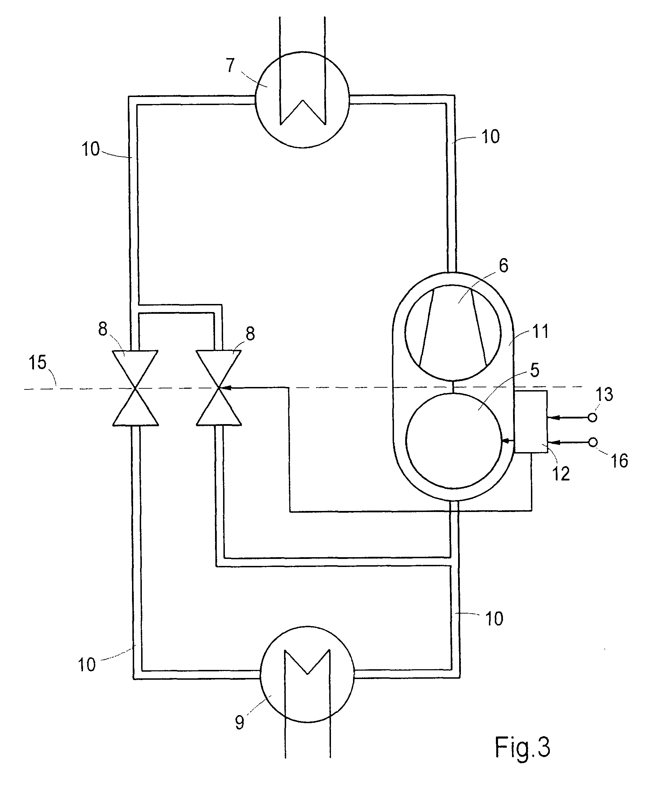

Bei dem Ausführungsbeispiel nach Fig. 3 steuert ein zusätzliches Expansionsventil 18 einen Bypass zum System-Expansionsventil 8 und zum Verdampfer 9. Nach der Anlaufphase wird das zusätzliche Expansionsventil geschlossen.

## Patentansprüche

1. Einrichtung zum Antrieb eines Klimakompressors mit einem Elektromotor insbesondere für Kraftfahrzeuge, **dadurch gekennzeichnet, daß** eine Anordnung (8, 14) zur Verringerung der Druckdifferenz zwischen Saug- und Druckseite des Klimakompressors (6) während einer Anlaufphase des Elektromotors (5) vorgesehen ist.

2. Einrichtung nach Anspruch 1, **dadurch gekennzeichnet, daß** die Anordnung zur Verringerung der Druckdifferenz dadurch gebildet ist, daß ein im Kältemittelkreislauf angeordnetes Expansionsventil (8) steuerbar ist.

3. Einrichtung nach Anspruch 1, **dadurch gekennzeichnet, daß** die Anordnung zur Verringerung der Druckdifferenz von einem steuerbaren Bypass (14) zwischen Saug- und Druckseite des Klimakompressors (6) gebildet ist.

4. Einrichtung nach Anspruch 3, **dadurch gekennzeichnet, daß** der Bypass (14) innerhalb des Gehäuses (17) des Klimakompressors (6) angeordnet ist.

5. Einrichtung nach Anspruch 3, **dadurch gekennzeichnet, daß** der Bypass (14) außerhalb des Gehäuses des Klimakompressors (6) angeordnet ist.

6. Einrichtung nach Anspruch 1, **dadurch gekennzeichnet, daß** die Anordnung zur Verringerung der Druckdifferenz von einem steuerbaren zusätzlichen Expansionsventil (18) gebildet ist, das zwischen der Hochdruckseite des Expansionsventils (8) und der Saugseite des Klimakompressors (6) im Kältemittelkreislauf angeordnet ist.

7. Einrichtung nach Anspruch 1, **dadurch gekennzeichnet, daß** die Anordnung zur Verringerung der Druckdifferenz von einem im Klimakompressor angeordneten drehzahlgesteuerten Ventil gebildet ist.

8. Einrichtung nach Anspruch 7, **dadurch gekennzeichnet, daß** das drehzahlgesteuerte Ventil eine Fliehkraft-Dichtung ist.

9. Einrichtung nach einem der vorhergehenden Ansprüche, **dadurch gekennzeichnet, daß** der Elektromotor (5) ein sensorloser Motor mit elektronischer Kommutierung ist.

10. Einrichtung nach einem der Ansprüche 1 bis 6, **dadurch gekennzeichnet, daß** ein Steuergerät (12) innerhalb einer vorgegebenen Zeitspanne nach dem Einschalten des Elektromotors (5) die Anordnung zur Verringerung (8, 14) der Druckdifferenz ansteuert und danach wieder abschaltet.

11. Einrichtung nach einem der Ansprüche 1 bis 6, **dadurch gekennzeichnet, daß** die Steuerung der Anordnung zur Verminderung der Druckdifferenz in Abhängigkeit von der Drehzahl des Klimakompressors (6) steuerbar ist.

12. Einrichtung nach einem der Ansprüche 10 oder 11, **dadurch gekennzeichnet, daß** das Steuergerät (12) und der Elektromotor (5) in wärmeleitender Verbindung mit dem Kältemittel an der Saugseite stehen.
